**Europäisches Patentamt**

**European Patent Office**

**Office européen des brevets**

(11) Veröffentlichungsnummer: **0 437 682 A2**

# EUROPÄISCHE PATENTANMELDUNG

(21) Anmeldenummer: 90120041.0

(51) Int. Cl.5: **B60S 1/54**

(22) Anmeldetag: 19.10.90

(30) Priorität: **16.01.90 DE 4001054**

(43) Veröffentlichungstag der Anmeldung:
**24.07.91 Patentblatt 91/30**

(84) Benannte Vertragsstaaten:
**DE FR GB IT**

(71) Anmelder: **Dr.Ing.h.c. F. Porsche**
**Aktiengesellschaft**
**Porschestrasse 42**
**W-7000 Stuttgart 40(DE)**

(72) Erfinder: **Ritter, Bernhard, Dipl.-Ing. (FH)**
**Bayernstrasse 31**
**W-7530 Pforzheim(DE)**
Erfinder: **Fahrlaender, Dieter, Dipl.-Ing. (FH)**
**Bleichberg 28**
**W-7147 Eberdingen(DE)**

(54) **Elektrischer Gebläsemotor.**

(57) Mit diesem Gebläsemotor, der eine Relaisschaltung umfaßt, ist ein elektrisches Heizelement zur Beseitigung von Beschlag, Frost oder dgl. an Sichtscheiben von Kraftfahrzeugen, vorzugsweise einer Heckscheibe eines Cabriolet-Verdecks, zusammengeschaltet.

Zum sicheren Betrieb des Heizelement, d.h., letzeres ist nur dann wirksam, wenn der Gebläsemotor läuft, dienen ein erstes Relais zur Ansteuerung des Gebläsemotors und ein zweites Relais zur Ansteuerung des Heizelements, wobei das zweite Relais mit einer Leitung des Steuerstromkreises an eine Anschlußklemme des Gebläsemotors angeschlossen ist.

FIG.1

## ELEKTRISCHER GEBLÄSEMOTOR

Die Erfindung betrifft einen elektrischen Gebläsemotor nach dem Oberbegriff des Patentanspruchs 1.

Es ist eine elektrische Scheibendefrostung für ein Kraftfahrzeug bekannt, DE-OS 37 19 639, bei der ein Heizwiderstand über ein Steuergerät und ein Relais nur dann mit Betriebsstrom versorgt wird, wenn an einer Anschlußleitung eines Lüftermotors Spannung anliegt.

Aufgabe der Erfindung ist es, eine Schaltung für einen elektrischen Gebläsemotor mit einem elektrischen Heizelement so auszugestalten, daß sie sich bei einfachem Aufbau durch hohe Betriebssicherheit auszeichnet.

Erfindungsgemäß wird diese Aufgabe durch die kennzeichnenden Merkmale des Patentanspruchs 1 gelöst. Weitere die Erfindung ausgestaltenden Merkmale sind in den Unteransprüchen enthalten.

Die mit der Erfindung hauptsächlich erzielten Vorteile sind darin zu sehen, daß das elektrische Heizelement bei Störungen im Steuer oder Laststromkreis des elektrischen Gebläsemotors sicher abgeschaltet ist; Überhitzungen des Heizelementes selbst oder benachbarter Teile werden auf diese Weise verhindert.

In der Zeichnung wird ein Ausführungsbeispiel der Erfindung gezeigt, das nachstehend näher beschrieben ist.

Es zeigt:

Fig. 1   eine schematische Schaltung für einen elektrischen Gebläsemotor mit einem elektrischen Heizelement,

Fig. 2   eine Einzelheit X der Fig. 1 in größerem Maßstab.

Eine Schaltung 1 dient für einen elektrischen Gebläsemotor 2 der mit einem elektrisches Heizelement 3 zusammengeschaltet ist. Mit dem Gebläsemotor 2 und dem Heizelement 3 sind Beschlag, Frost oder dgl. von einer Heckscheibe eines Cabriolet-Verdecks - beide letzteren sind nicht dargestellt - beseitigbar. Die Schaltung 1 umfaßt ein erstes Relais 4 zur Ansteuerung des Gebläsemotors 2 und ein zweites Relais 5 zur Ansteuerung des Heizelements 3. Das erste Relais 4 weist einen Steuerstromkreis 6 auf, der Leitungen 7, 8 besitzt, die an eine Spule 9 angeschlossen sind. In der der Spule 9 vorgeschalteten Leitung 7 ist ein Betriebsschalter 10 angeordnet; in der der Spule 9 nachgeschalteten Leitung 8 ein Verdeckschalter 11, mit dem die Positionen $VS_g$ und $VS_o$ einschaltbar sind, wobei $VS_g$ dem geschlossenen Verdeck entspricht, das heißt, wenn das Verdeck den Fahrgastraum überspannt. $VS_o$ ist die Stellung in der das Verdeck offen ist. Außerdem besitzt das erste Relais 4 einen Laststromkreis 12, der mit Leitungen 13, 14 an den Gebläsemotor 2 angeschlossen ist.

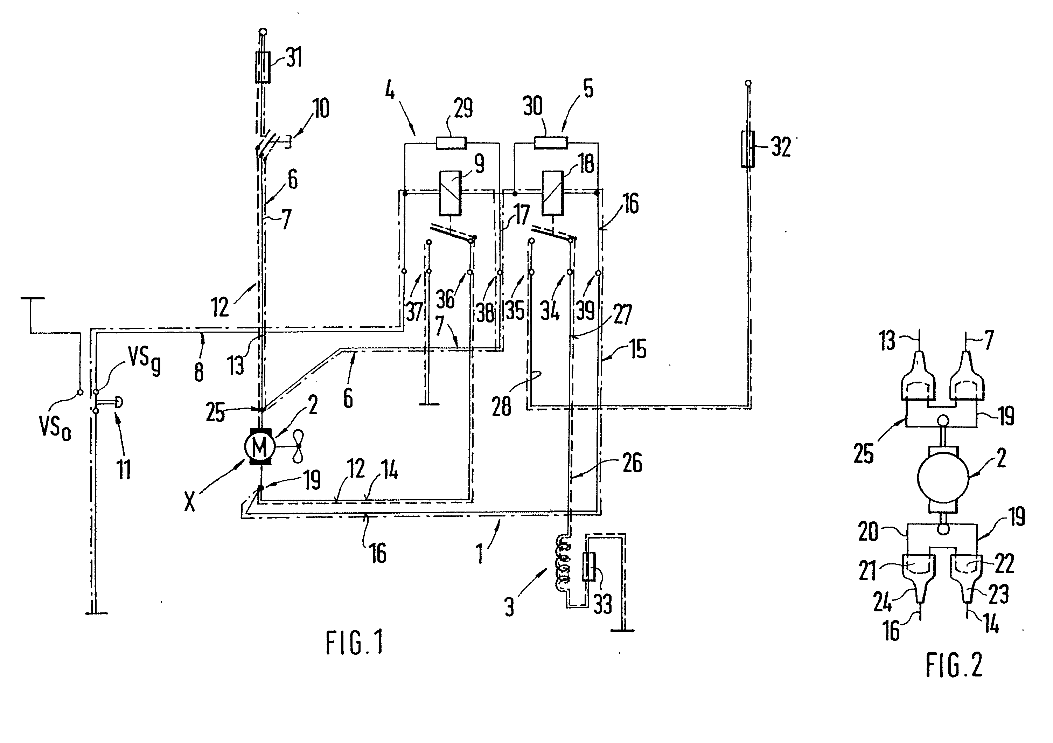

Das zweite Relais 5 arbeitet mit einem Steuerstromkreis 15 zusammen, der mit Leitungen 16, 17 an einer Spule 18 liegt. Die Leitung 16 des Steuerstromkreises 15 ist an eine Anschlußklemme 19 des Gebläsemotors 2 angeschlossen, die auch noch mit der Leitung 14 des Laststromkreises 12 verbunden ist. Die Anschlußklemme 19, die möglichst nahe am Gebläsemotor 2 angeordnet ist (Fig. 2), ist eine kontaktbrückenartige Einheit 20, die zwei Aufnahmen 21, 22 für getrennte Stecker 23, 24 der Leitungen 15, 17 besitzt. Eine ähnliche Ausführung ist auf der anderen Seite des Gebläsemotors 2 bei 25 vorgesehen. Beide Ausführungen stellen sicher, daß sich eine Stromunterbrechung zum Gebläsemotor 2 auch auf das zweite Relais 5 auswirkt, d.h., das Heizelement 3 ist dann nicht in Betrieb. Darüber hinaus ist das Relais 5 mit einem Laststromkreis 26 für das Heizelement 3 versehen, der Leitungen 27, 28 umfaßt.

Mit 29, 30 sind Widerstände der Spulen 9 und 18 bezeichnet, die zur Entstörung dienen. Außerdem umfaßt die Schaltung 1 Sicherungen 31, 32 und 33.

Die beiden Spulen 9 und 18 weisen unabhängige Kontakte 34, 35 bzw. 36, 37 auf, wobei besagte Spulen mit einem Kontakt 38 verbunden sind, der ein Plussignal erhält, sobald der Betriebsschalter 10 geschlossen ist. Die Spule 9 zieht an, wenn beide Schalter - Betriebsschalter 10 und Verdeckschalter 11 - geschlossen sind. Der massegeschaltete Gebläsemotor 2 läuft unter dieser Voraussetzung und gleichzeitig erhält Anschluß 39 von der Spule 18 Masse, wodurch das Heizelement 3 bestromt wird. Die Zuschaltung des Heizelements 3 erfolgt aufgrund dieser Schaltung nur dann, wenn die Sicherung 31 funktionsfähig ist, die Schalter 10 und 11 geschlossen sind und die Leitungen 13, 7 bzw. 16, 14 mit den Anschlußklemmen 19, 25 ordnungsgemäß verbunden sind.

**Patentansprüche**

1.   Elektrischer Gebläsemotor mit einem zusammengeschalteten elektrischen Heizelement zur Beseitigung von Beschlag, Frost oder dgl. an Sichtscheiben von Kraftfahrzeugen, vorzugsweise einer Heckscheibe eines Cabriolet-Verdecks, wobei der Gebläsemotor eine ein Relais aufweisende Schaltung umfaßt, dadurch gekennzeichnet, daß die Schaltung (1) durch ein erstes Relais (4) zur Ansteuerung des Gebläsemotors (2) und ein zweites Relais (5) zur Ansteuerung des Heizelementes (3) gebildet wird, und daß das zweite Relais (5) mit einer Leitung (16) eines Steuerstromkreises (15) an einer Anschlußklemme (19) des Gebläsemotors (2) angeschlossen ist.

2. Elektrischer Gebläsemotor nach Anspruch 1, dadurch gekennzeichnet, daß die Schaltung (1) zusätzlich zum Betriebsschalter (10) einen Verdeckschalter (11) umfaßt.

3. Elektrischer Gebläsemotor nach Anspruch 1, dadurch gekennzeichnet, daß der steuerstromseitige Anschluß (Anschlußelemente 19, 25) des ersten und des zweiten Relais (4, 5) möglichst nahe am Gebläsemotor (2) liegt.

4. Elektrischer Gebläsemotor nach einem oder mehreren der vorangehenden Ansprüche, dadurch gekennzeichnet, daß die Anschlußklemmen (19, 25) des elektrischen Gebläsemotors (2) für das erste und das zweite Relais (4 und 5) durch eine Einheit (20) gebildet sind, die je zwei Aufnahmen (22, 23) für getrennte Stecker (23, 24) der Leitungen (14, 16 und 6, 13) beider Relais (4 und 5) aufweist.

FIG.1

FIG.2

EP 0 437 682 A2